# EUROPEAN PATENT APPLICATION

(11) **EP 4 772 290 A1**
(43) Date of publication of application: **08.07.2026**
(21) Application number: 24890044.1
(22) Date of filing: 29.05.2024
(51) Int. Cl.: B08B 5/02

(54) **CUP DUST REMOVAL MECHANISM AND BATTERY PRODUCTION LINE**

(30) Priority: 16.11.2023 CN 202311533324
(71) Applicant: Contemporary Amperex Technology Co., Limited, Ningde, Fujian 352100 (CN)
(72) Inventor: WU, Kai, Ningde, Fujian 352100 (CN); LIU, Fusheng, Ningde, Fujian 352100 (CN); ZUO, Wentao, Ningde, Fujian 352100 (CN); ZHANG, Shuming, Ningde, Fujian 352100 (CN)
(74) Representative: Ziebig Hengelhaupt Intellectual Property Attorneys Patentanwaltskanzlei PartGmbB
(86) International application number: PCT/CN2024/096105
(87) International publication number: WO 2025/102674

(57) **Abstract**

Disclosed are a cup holder dust removal mechanism and a battery production line. The cup holder dust removal mechanism includes a conveyor line (20), a box (30), a transfer apparatus (40), a blowing apparatus (50), and an extraction apparatus (60). The conveyor line (20) passes through the box (30), the transfer apparatus (40), the blowing apparatus (50), and the extraction apparatus (60) are mounted on the box (30), the transfer apparatus (40) includes a transfer track (410), the transfer track (410) includes an inlet section (411), an outlet section (412), and a working section (413) located between the inlet section (411) and the outlet section (412), an inlet of the inlet section (411) and an outlet of the outlet section (412) are both docked with the conveyor line (20), in a vertical direction, at least part of a projection of the working section (413) does not overlap with a projection of the conveyor line (20), the blowing apparatus (50) includes a blowing nozzle (51), and the extraction apparatus (60) includes an extraction end (61). The technical solution of the present application aims to remove dust and/or foreign matter remaining in the cup holder during cyclic use, reduce the probability of contaminating cells, and improve the product quality of batteries.

## Description

The present application claims priority to Chinese Patent Application No. 2023115333247, filed on November 16, 2023 and entitled "CUP HOLDER DUST REMOVAL MECHANISM AND BATTERY PRODUCTION LINE," the entire contents of which are incorporated herein by reference.

### TECHNICAL FIELD

The present application relates to the field of battery manufacturing technology, and particularly, to a cup holder dust removal mechanism and a battery production line.

### BACKGROUND

With the gradual maturation of new energy technologies, lithium batteries have been widely applied in various fields due to their characteristics such as light weight, high energy storage, high power, no pollution, long lifespan, low self-discharge coefficient, and wide temperature adaptability. In the process of preparing lithium batteries, a cup holder is an indispensable tool for conveying cells. The cup holder can protect semi-finished cells (cells may also be referred to as jelly roll structures), that is, protect the jelly roll structures during convey of the jelly roll structures, to ensure the manufacturing quality of lithium batteries.

Typically, cup holders need to be used cyclically. After a batch of jelly roll structures are conveyed and the jelly roll structures are removed from the cup holder, the empty cup holder is circulated back to the initial process along the conveyor line to convey the next batch of jelly roll structures. However, after the cup holder conveys a batch of jelly roll structures, dust and/or foreign matter may remain in the cup holder. When the cup holder is reused to convey the next batch of jelly roll structures, the residual dust and/or foreign matter may contaminate the jelly roll structures, and the dust and/or foreign matter may be carried into the battery when the jelly roll structures are assembled into batteries, leading to a risk of short circuits of the battery and affecting the product quality of the battery.

### SUMMARY

An objective of the embodiments of the present application is to provide a cup holder dust removal mechanism and a battery production line, having functions, which include, but are not limited to, removing dust and/or foreign matter remaining in the cup holder during cyclic use of the cup holder, reducing the probability of contaminating jelly roll structures, and improving the product quality of batteries.

The technical solution adopted in the embodiments of the present application is as follows:

According to a first aspect of the present application, a cup holder dust removal mechanism is provided, including:
a conveyor line configured to convey a cup holder;
a box having an accommodation cavity, where the conveyor line passes through the box;
a blowing apparatus mounted on the box, the blowing apparatus being provided with a blowing nozzle, and the blowing nozzle being in communication with the accommodation cavity;
an extraction apparatus mounted on the box, the extraction apparatus being provided with an extraction end, and the extraction end being in communication with the accommodation cavity; and
a transfer apparatus mounted on the box, the transfer apparatus being provided with a transfer track, the transfer track being located within the accommodation cavity, the transfer track having an inlet section, an outlet section, and a working section located between the inlet section and the outlet section, where an inlet of the inlet section and an outlet of the outlet section are both docked with the conveyor line, in a vertical direction, at least part of a projection of the working section does not overlap with a projection of the conveyor line, and the blowing nozzle is located directly above the working section, and an extraction port of the extraction end is located below the working section.

The cup holder dust removal mechanism provided in the embodiments of the present application can move the cup holder out of the conveyor line via the transfer apparatus. Subsequently, the blowing apparatus blows dust and/or foreign matter remaining on the cup holder, facilitating the detachment of the dust and/or foreign matter on the cup holder from the inner wall and outer wall of the cup holder, and the extraction apparatus removes the dust and/or foreign matter, thereby achieving comprehensive dust removal and cleaning of the cup holder. Moreover, since the transfer apparatus moves the cup holder out of the conveyor line, the probability of the dust and/or foreign matter blown off the cup holder falling onto the conveyor line is reduced, thereby reducing the possibility of re-contamination of the cup holder by dust and/or foreign matter, and improving the cleaning effect of the dust removal and cleaning for the cup holder.

In some embodiments of the present application, the projection of the working section does not overlap with the projection of the conveyor line at all. The cup holder is blown by a pressurized airflow from the blowing nozzle, causing the dust and/or foreign matter blown and detached from the cup holder to avoid the conveyor line in the vertical direction, thus effectively reducing the probability of the dust and/or foreign matter blown and detached from the cup holder falling onto the conveyor line.

In some embodiments of the present application, a bottom of the cup holder is provided with a through hole, and the extraction port of the extraction end is located directly below the working section. Dust and/or foreign matter blown and attached to the inner wall of the cup holder is blown off, and since the bottom of the cup holder is provided with the through hole, and the extraction port of the extraction end operates synchronously with the blowing, the blown and detached dust and/or foreign matter is directly extracted through the through hole without being raised or scattered, thereby reducing the probability of the blown and detached dust and/or foreign matter falling onto the conveyor line.

In some embodiments of the present application, the transfer apparatus includes a driver, a drive disc, and a connecting plate, the driver being mounted on the box, the driver being drivingly connected to the drive disc, at least part of the drive disc being located within the accommodation cavity and above the conveyor line, the connecting plate being mounted on the box, the connecting plate having an arc-shaped edge adapted to an edge of the drive disc, and the edge of the drive disc being opposite to the arc-shaped edge to cooperatively form the transfer track. The driver drives the drive disc to rotate, such that the drive disc drives the cup holder to move forward along the transfer track, enabling the cup holder to pass through the working section quickly, thereby improving the operation efficiency of the dust removal and cleaning for the cup holder.

In some embodiments of the present application, the drive disc is entirely located within the accommodation cavity, where the box completely covers the drive disc, simplifying the structural design of the box.

In some embodiments of the present application, a friction member is mounted on a circumferential edge of the drive disc. The friction member increases the relative friction coefficient between the edge of the drive disc and the outer wall of the cup holder, reducing or even eliminating the frequency of slipping.

In some embodiments of the present application, the friction member is an annular elastic sleeve, the annular elastic sleeve being wrapped around the circumferential edge of the drive disc; or the friction member includes a plurality of friction blocks, each friction block being sequentially and adjacently embedded and fixed along the circumferential edge of the drive disc.

In some embodiments of the present application, a circumferential outer wall of the cup holder is provided with an annular groove, the annular groove being adapted to the edge of the drive disc and the arc-shaped edge. Thus, the edge of the drive disc and the arc-shaped edge of the connecting plate cooperatively provide positioning constraints for the cup holder, enabling the cup holder to accurately enter the transfer track.

In some embodiments of the present application, an arc length of the arc-shaped edge corresponding to the working section is greater than or equal to a circumference of the annular groove. The cup holder rotates at least one full turn, allowing all cavity walls and outer walls of the placement cavity of the cup holder to be blown once, thereby achieving dust removal and cleaning of the cup holder as thorough as possible.

In some embodiments of the present application, the blowing apparatus is provided with a plurality of blowing nozzles, the plurality of blowing nozzles being sequentially spaced along an arc-shaped path of the working section. The plurality of blowing nozzles comprehensively blow the cavity walls and outer walls of the cup holder, achieving dust removal and cleaning of the cup holder as thorough as possible, and improving the cleanliness of the cup holder during the dust removal and cleaning.

In some embodiments of the present application, an outlet of each blowing nozzle is configured as a linear outlet, and linear directions of the linear outlets of two adjacent blowing nozzles intersect. The pressurized airflow blown from each blowing nozzle forms a planar air curtain, which, compared to columnar or linear pressurized airflow, can blow a larger area of the cup holder, resulting in higher operation efficiency of the dust removal and cleaning for the cup holder and higher cleanliness during the dust removal and cleaning.

In some embodiments of the present application, along a convey direction of the cup holder in the working section, intersection angles between the linear directions of the linear outlets of the blowing nozzles and an extension direction of the conveyor line are different. The planar air curtains formed by the blowing of each blowing nozzle can comprehensively blow the cavity walls and outer walls of the cup holder, achieving dust removal and cleaning of the cup holder as thorough as possible, and improving the cleanliness of the cup holder during the dust removal and cleaning.

In some embodiments of the present application, the extraction end is configured in a flared shape, thereby reducing the assembly space occupied by the extraction end in the cup holder dust removal mechanism, facilitating a compacted and miniaturized design of the cup holder dust removal mechanism.

In some embodiments of the present application, an extraction volume of the extraction apparatus is greater than or equal to a blowing volume of the blowing apparatus. This ensures that the accommodation cavity of the box is maintained in a relatively negative pressure state or a relatively stable pressure state, such that dust and/or foreign matter blown and detached from the cup holder is immediately extracted, preventing the dust and/or foreign matter from diffusing or scattering.

In some embodiments of the present application, the cup holder dust removal mechanism further includes a negative pressure airflow detection sensor, the negative pressure airflow detection sensor being mounted within the accommodation cavity, and the negative pressure airflow detection sensor being configured to detect a negative pressure airflow speed within the accommodation cavity. The cup holder dust removal mechanism employs the negative pressure airflow detection sensor to automatically detect the negative pressure airflow speed within the accommodation cavity of the box, enabling monitoring of the negative pressure airflow speed.

In some embodiments of the present application, the cup holder dust removal mechanism further includes an ion airflow generator, the ion airflow generator being mounted on the box, an outlet of the ion airflow generator being in communication with the accommodation cavity, and the outlet of the ion airflow generator being disposed above the inlet section. The ion airflow, with its ionic charge, neutralizes the static charge carried by dust and/or foreign matter, eliminating the electrostatic adsorption capability of the dust and/or foreign matter, and enabling the dust and/or foreign matter attached to the cup holder to be blown and detached as thorough as possible from the cup holder by blowing, thereby improving the cleanliness of the cup holder during the dust removal and cleaning.

According to another aspect of the present application, a battery production line is provided, where the battery production line includes the cup holder dust removal mechanism as described above. The battery production line employs the cup holder dust removal mechanism provided in the embodiments of the present application to perform dust removal and cleaning on the cup holder used for conveying jelly roll structures. During the dust removal and cleaning, the transfer apparatus can move the cup holder out of the conveyor line, the blowing apparatus blows the dust and/or foreign matter remaining on the cup holder, and the extraction apparatus removes the dust and/or foreign matter, thereby achieving comprehensive dust removal and cleaning of the cup holder.

### BRIEF DESCRIPTION OF DRAWINGS

To more clearly illustrate the technical solutions in the embodiments of the present application, the drawings used in the description of the embodiments or exemplary technical descriptions are briefly described below. It is apparent that the drawings described below are merely some embodiments of the present application, and those skilled in the art can obtain other drawings based on these drawings without creative effort.
FIG. 1 is a schematic diagram of an assembly structure of a cup holder dust removal mechanism according to an embodiment of the present application.
FIG. 2 is a second schematic diagram of an assembly structure of a cup holder dust removal mechanism according to an embodiment of the present application.
FIG. 3 is a third schematic diagram of an assembly structure of a cup holder dust removal mechanism according to an embodiment of the present application, where a box is disassembled.
FIG. 4 is a fourth schematic diagram of an assembly structure of a cup holder dust removal mechanism according to an embodiment of the present application, where the box and the blowing apparatus are disassembled.
FIG. 5 is a schematic mechanism diagram of relative assembly positions of an extraction apparatus, a negative pressure airflow detection sensor, a cup holder, and a blowing nozzle in a cup holder dust removal mechanism according to an embodiment of the present application.
FIG. 6 is a schematic diagram of a structure of a blowing nozzle in a cup holder dust removal mechanism according to an embodiment of the present application.
FIG. 7 is a schematic diagram of a structure of a cup holder in a cup holder dust removal mechanism according to an embodiment of the present application.

Description of reference signs in the drawings:
10. cup holder; 11. through hole; 12. annular groove; 13. placement cavity;
20. conveyor line;
30. box; 31. accommodation cavity; 32. box inlet; 33. box outlet;
40. transfer apparatus; 410. transfer track; 411. inlet section; 412. outlet section; 413. working section; 41. driver; 42. drive disc; 43. connecting plate; 44. friction member; 45. arc-shaped edge;
50. blowing apparatus; 51. blowing nozzle; 52. linear outlet;
60. extraction apparatus; 61. extraction end; 62. extraction port;
70. negative pressure airflow detection sensor; 71. negative pressure display meter;
80. ion airflow generator; and
91. counter.

### DESCRIPTION OF EMBODIMENTS

To make the objectives, technical solutions, and advantages of the present application clearer, the present application is further described in detail below with reference to the drawings and embodiments. It should be understood that the specific embodiments described herein are only used to explain the present application and are not intended to limit the present application.

It should be noted that when a component is referred to as being "fixed to" or "disposed on" another component, it may be directly or indirectly on the another component. When a component is referred to as being "connected to" another component, it may be directly or indirectly connected to the another component. The terms "upper," "lower," "left," "right," and the like indicate orientations or positional relationships based on the orientations or positional relationships shown in the drawings, and are only for ease of description, not indicating or implying that the referred means or element must have a specific orientation, be constructed, or operated in a specific orientation, and thus should not be construed as limiting the present application. For those skilled in the art, the specific meanings of the above terms can be understood based on specific circumstances. The terms "first" and "second" are used for descriptive purposes only and should not be understood as indicating or implying relative importance or implying the number of technical features. The term "plurality of" means two or more, unless otherwise expressly limited.

To illustrate the technical solutions provided by the present application, a detailed description is provided below with reference to specific drawings and embodiments.

Currently, from the perspective of market development, the application of traction batteries, especially lithium batteries, is becoming increasingly widespread. Lithium batteries are not only used in energy storage systems such as hydroelectric, thermal, wind, and solar power plants but are also widely applied in electric vehicles such as electric bicycles, electric motorcycles, and electric cars, as well as in police equipment, military equipment, and aerospace fields. With the continuous expansion of lithium battery applications, the market demand for lithium batteries is also continuously increasing.

In the process of preparing lithium batteries, a series of processes are required, including but not limited to composite process, winding process, shaping process, battery cell assembly process, and welding process. After the winding process is completed, the semi-finished jelly roll structure is formed. During the convey of the jelly roll structure to subsequent processes, a cup holder must be used to carry the jelly roll structure, thereby protecting the jelly roll structure and reducing the probability of damage to the jelly roll structure due to external forces or objects during convey, thus improving the product yield of lithium batteries.

The composite process refers to roll-pressing and combining a positive electrode plate, a separator, and a negative electrode plate to form a cell material roll to be wound into a jelly roll structure.

The winding process refers to winding the composite cell material roll to form a semi-finished jelly roll structure. At this stage, the wound semi-finished jelly roll structure is in a loose state, the jelly roll structure is in an unfixed shape and contour, and the positive electrode plate and negative electrode plate in the jelly roll structure are prone to slipping and difficult to assemble.

The shaping process refers to using a hot-pressing or cold-pressing process to clamp and form the loose semi-finished jelly roll structure, fixing the shape and contour of the jelly roll structure, thereby addressing the issue of the positive electrode plate and negative electrode plate in the jelly roll structure being prone to slipping and difficult to assemble in the loose state, and improving the assembly accuracy and assembly efficiency of the subsequent battery cell assembly process.

The battery cell assembly process refers to assembling the shaped jelly roll structure, a current collector, a housing body, and a housing cover into a battery cell.

The welding process refers to welding the housing body, the housing cover, and electrode terminals, such that the housing body and the housing cover are sealed, and the electrode terminals are electrically connected to the jelly roll structure.

In related technologies, the cup holder is used cyclically, conveying batches of jelly roll structures between adjacent processes. However, after the cup holder conveys a batch of cells, dust and/or foreign matter may remain in the cup holder. If the residual dust and/or foreign matter in the cup holder is not cleaned in time, when the cup holder conveys a next batch of jelly roll structures, the residual dust and/or foreign matter in the cup holder contaminates these jelly roll structures. When these contaminated jelly roll structures are assembled into battery cells, the contaminated jelly roll structures bring the dust and/or foreign matter into the battery cells, leading to a risk of short circuits of the battery cells. When these battery cells are assembled into lithium batteries, the battery cells with short-circuit risks affect the product quality of the lithium batteries.

Based on the above considerations, to address the issue in related technologies where dust and/or foreign matter remains in the cup holder during cyclic convey of jelly roll structures by the cup holder, leading to contamination of the jelly roll structures and affecting the product quality of lithium batteries, embodiments of the present application provide a cup holder dust removal mechanism. The cup holder dust removal mechanism provided in the embodiments of the present application can move the cup holder out of the conveyor line via the transfer apparatus. Subsequently, the blowing apparatus blows the dust and/or foreign matter remaining on the cup holder, facilitating the detachment of the dust and/or foreign matter on the cup holder from the inner wall and outer wall of the cup holder, and the extraction apparatus removes the dust and/or foreign matter, thereby achieving comprehensive dust removal and cleaning of the cup holder. Moreover, since the transfer apparatus moves the cup holder out of the conveyor line, the probability of the dust and/or foreign matter blown off the cup holder falling onto the conveyor line is reduced, thereby reducing the possibility of re-contamination of the cup holder by dust and/or foreign matter, and improving the cleaning effect of the dust removal and cleaning for the cup holder.

Furthermore, an embodiment of the present application also provides a battery production line that employs the cup holder dust removal mechanism to perform dust removal and cleaning on the cup holder, used for manufacturing lithium batteries and improving the product quality of the lithium batteries.

The cup holder dust removal mechanism and the battery production line provided in the embodiments of the present application are applied in the manufacturing of lithium batteries, particularly cylindrical lithium batteries. The cleaned cup holder is used to convey jelly roll structures and the jelly roll structures are assembled into lithium batteries. The manufactured lithium batteries can be used in, but are not limited to, mobile phones, tablets, laptops, electric toys, electric tools, electric bicycles, electric vehicles, ships, and spacecraft. Electric toys may include fixed or mobile electric toys, such as gaming consoles, electric car toys, electric ship toys, and electric airplane toys. Spacecraft may include airplanes, rockets, space shuttles, spaceships, and the like.

Additionally, the cup holder dust removal mechanism provided in the embodiments of the present application can be used to clean convey carriers (that is, cup holders). The cleaned cup holders can also be used to convey PCB motherboards in PCB motherboard manufacturing, the cleaned cup holders may further be used to convey chips or silicon wafers in chip manufacturing, or the cleaned cup holders may further be used to convey components requiring convey in other industrial product manufacturing.

In the following, the embodiments of the present application take the example of the cup holder being used to convey jelly roll structures in the manufacturing of lithium batteries for description.

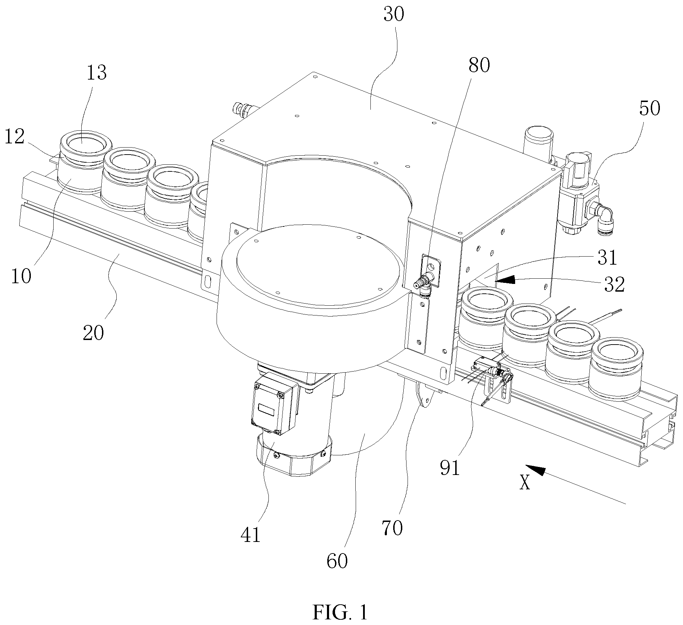

According to some embodiments of the present application, as shown in FIG. 1 to FIG. 3, the cup holder dust removal mechanism includes a conveyor line 20, a box 30, a transfer apparatus 40, a blowing apparatus 50, and an extraction apparatus 60. The conveyor line 20 is configured to convey a cup holder 10, enabling the cup holder 10 to be cyclically conveyed between two predetermined adjacent stations. The box 30 has an accommodation cavity 31, and the conveyor line 20 passes through the box 30, meaning that the cup holder 10 conveyed by the conveyor line 20 enters the accommodation cavity 31 along with the conveyor line 20. The transfer apparatus 40 is mounted on the box 30, and the transfer apparatus 40 is configured to transfer the cup holder 10 entering the accommodation cavity 31, causing the cup holder 10 entering the accommodation cavity 31 to be offset relative to the conveyor line 20, thereby facilitating convenient dust removal and cleaning of the cup holder 10 as thorough as possible. The transfer apparatus 40 is provided with a transfer track 410, and the transfer track 410 is located within the accommodation cavity 31, the transfer track 410 having an inlet section 411, an outlet section 412, and a working section 413 located between the inlet section 411 and the outlet section 412. The inlet of the inlet section 411 and the outlet of the outlet section 412 are both docked with the conveyor line 20, that is, the inlet of the inlet section 411 is docked with the conveyor line 20 at a box inlet 32, and the outlet of the outlet section 412 is docked with the conveyor line 20 at a box outlet 33. Thus, the cup holder 10 entering the accommodation cavity 31 is conveyed by the conveyor line 20 to enter the inlet section 411 of the transfer track 410 at the box inlet 32, and move along the transfer track 410 to the working section 413. Then, the cup holder 10 moves to the outlet section 412, and the cup holder 10 returns to the conveyor line 20 from the outlet of the outlet section 412 at the box outlet 33. In the cup holder dust removal mechanism of the embodiments of the present application, in a vertical direction, at least part of a projection of the working section 413 does not overlap with a projection of the conveyor line 20. In other words, the cup holder 10, within the accommodation cavity 31 of the box 30, moving along the transfer track 410 to the working section 413 is in a relatively offset state with respect to the segment of the conveyor line 20 within the accommodation cavity 31, meaning that the cup holder 10 is offset from the conveyor line 20 in the working section 413. The blowing apparatus 50 is mounted on the box 30, the blowing apparatus 50 is provided with a blowing nozzle 51, the blowing nozzle 51 is in communication with the accommodation cavity 31, and the blowing apparatus 50 blows a predetermined pressure airflow into the accommodation cavity 31 through the blowing nozzle 51. Additionally, the blowing nozzle 51 is located directly above the working section 413, such that the pressurized airflow entering the accommodation cavity 31 blows the cup holder 10, causing dust and/or foreign matter attached to the inner wall and outer wall of the cup holder 10 to be blown and detached. Then, the dust and/or foreign matter detached from the cup holder 10 is removed by the extraction apparatus 60, meaning that the extraction apparatus 60 is mounted on the box 30, and the extraction apparatus 60 is provided with an extraction end 61, the extraction end 61 being in communication with the accommodation cavity 31. The extraction port 62 of the extraction end 61 is located below the working section 413, and correspondingly, since the blowing nozzle 51 of the blowing apparatus 50 is located directly above the working section 413, the dust and/or foreign matter blown and detached from the cup holder 10 can be directly extracted downward by the extraction apparatus 60, thereby cleaning the cup holder 10. Moreover, since the cup holder 10 is offset from the conveyor line 20 in the working section 413, in the process of the blowing nozzle 51 blowing the cup holder 10, the probability of dust and/or foreign matter detached from the cup holder 10 falling onto the conveyor line 20 can be reduced, thereby reducing the probability that the cup holder 10, during return to the conveyor line 20 from the outlet of the outlet section 412, is re-contaminated by dust and/or foreign matter falling onto the conveyor line 20, thus improving the cleanliness of the cup holder 10 for conveying jelly roll structures and contributing to improving the product quality of manufactured lithium batteries.

"The inlet of the inlet section 411 is docked with the conveyor line 20" means that when the cup holder 10 is conveyed by the conveyor line 20 to the box inlet 32, the cup holder 10 can enter the inlet section 411 from the conveyor line 20. For the assembled structure, the inlet of the inlet section 411 may be connected to the conveyor line 20, allowing the cup holder 10 to be directly transferred from the conveyor line 20 to the inlet section 411; or the inlet of the inlet section 411 may not be directly connected to the conveyor line 20, in which case the inlet of the inlet section 411 is disposed above the conveyor line 20, and the height of the inlet of the inlet section 411 relative to the conveyor line 20 is less than the height of the cup holder 10 on the conveyor line 20, enabling the cup holder 10 to smoothly enter the inlet section 411.

"The outlet of the outlet section 412 is docked with the conveyor line 20" means that when the cup holder 10 moves along the transfer track 410 to the outlet of the outlet section 412, that is, at the box outlet 33, the cup holder 10 can return to the conveyor line 20 from the outlet section 412. For the assembled structure, the outlet of the outlet section 412 may be connected to the conveyor line 20, allowing the cup holder 10 to be directly transferred back to the conveyor line 20 from the outlet section 412; or the outlet of the outlet section 412 may not be directly connected to the conveyor line 20, in which case the outlet of the outlet section 412 is disposed above the conveyor line 20, and the height of the outlet of the outlet section 412 relative to the conveyor line 20 is less than the height of the cup holder 10 on the conveyor line 20, enabling the cup holder 10 to smoothly return to the conveyor line 20 from the outlet section 412.

"At least part of a projection of the working section 413 does not overlap with a projection of the conveyor line 20" means that, in a vertical direction, when the transfer track 410 and the conveyor line 20 are viewed from top, the projection of only part of the working section 413 in the vertical direction of the working section 413 may overlap with the projection of the conveyor line 20 in the vertical direction, with the other part of the working section 413 offset from the conveyor line 20 (that is, only part of the working section 413 obscures the conveyor line 20), or the working section 413 may be completely offset from the conveyor line 20 (that is, the working section 413 does not obscure the conveyor line 20 at all). Therefore, when the cup holder 10 moving on the working section 413 moves to the part of the working section 413 that is offset from the conveyor line 20, the projection of the cup holder 10 in the vertical direction and the projection of the conveyor line 20 in the vertical direction are offset from each other.

"The extraction port 62 of the extraction end 61 is located below the working section 413" means that, in a vertical direction, in the working section 413, the extraction port 62 of the extraction end 61 is positioned directly below the part of the working section 413 whose projection is offset from the projection of the conveyor line 20, such that dust and/or foreign matter blown and detached from the cup holder 10 can be extracted while avoiding the conveyor line 20, effectively reducing the probability of the dust and/or foreign matter blown and detached from the cup holder 10 falling onto the conveyor line 20.

In some embodiments of the present application, only part of the working section 413 obscures the conveyor line 20, meaning that the projection of a small segment of the working section 413 facing toward and being adjacent to the inlet section 411 and the projection of a small segment of the working section 413 facing toward and being adjacent to the outlet section 412 overlap with the projection of the conveyor line 20, while the remaining part of the working section 413 is offset from the conveyor line 20, and the blowing nozzle 51 is located directly above the part of the working section 413 that is offset from the conveyor line 20. In other words, as the cup holder 10 gradually moves from the inlet section 411 to the working section 413 along the transfer track 410, the overlapping part of the projections of the cup holder 10 and the conveyor line 20 in the vertical direction gradually decreases until there is no overlap. Then, as the cup holder 10 gradually moves into the outlet section 412, the overlapping part of the projections of the cup holder 10 and the conveyor line 20 in the vertical direction gradually increases until the cup holder 10 returns to the conveyor line 20. When the cup holder 10 moves to the part of the working section 413 that is offset from the conveyor line 20, the pressurized airflow blown from the blowing nozzle 51 blows the cup holder 10, causing the dust and/or foreign matter blown and detached from the cup holder 10 to avoid the conveyor line 20 in the vertical direction, thus effectively reducing the probability of the detached dust and/or foreign matter blown and detached from the cup holder falling onto the conveyor line 20. Since the extraction port 62 of the extraction end 61 is located below the working section 413, the dust and/or foreign matter blown and detached from the cup holder 10 can be extracted while avoiding the conveyor line 20, thereby cleaning the dust and/or foreign matter.

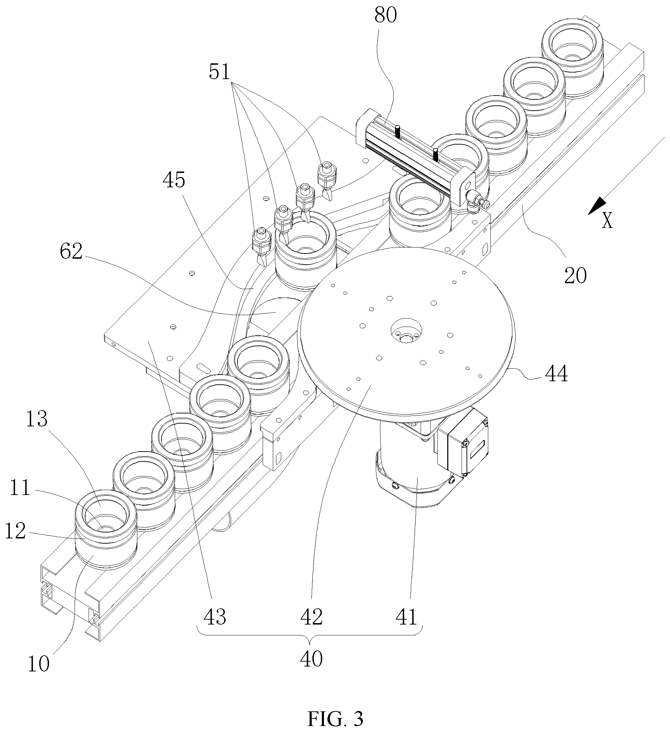

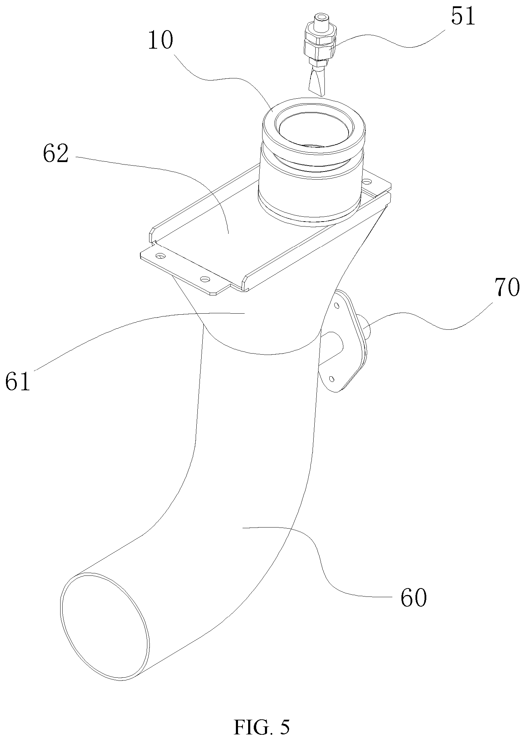

In some embodiments of the present application, the projection of the working section 413 does not overlap with the projection of the conveyor line 20 at all, meaning that, when the transfer track 410 and the conveyor line 20 are viewed from top, the entire working section 413 is completely offset from the conveyor line 20. In this case, the entire region directly above the working section 413 can be used for disposing the blowing nozzle 51, and the entire region directly below the working section 413 can be used for disposing the extraction port 62. In practice, as shown in FIG. 3, a plurality of blowing nozzles 51 are sequentially spaced along the arc-shaped path of the working section 413 in the region directly above the working section 413, and as shown in FIG. 3 and FIG. 5, the entire region directly below the working section 413 is within the range of the extraction port 62 (that is, the extraction port 62 of the extraction end 61 is located directly below the working section 413). When the cup holder 10 moves to the working section 413, it is immediately blown by the pressurized airflow from the blowing nozzle 51, causing the dust and/or foreign matter blown and detached from the cup holder 10 to avoid the conveyor line 20 in the vertical direction, thus effectively reducing the probability of the dust and/or foreign matter blown and detached from the cup holder 10 falling onto the conveyor line 20. Since the entire region directly below the working section 413 is within the range of the extraction port 62, the dust and/or foreign matter blown and detached from the cup holder 10 can be extracted while avoiding the conveyor line 20, thereby cleaning the dust and/or foreign matter.

The configuration adopted by the cup holder dust removal mechanism of the embodiments of the present application is: the entire working section 413 is completely offset from the conveyor line 20, a plurality of blowing nozzles 51 are sequentially spaced along the arc-shaped path of the working section 413 directly above the working section 413, and the entire region directly below the working section 413 is within the range of the extraction port 62.

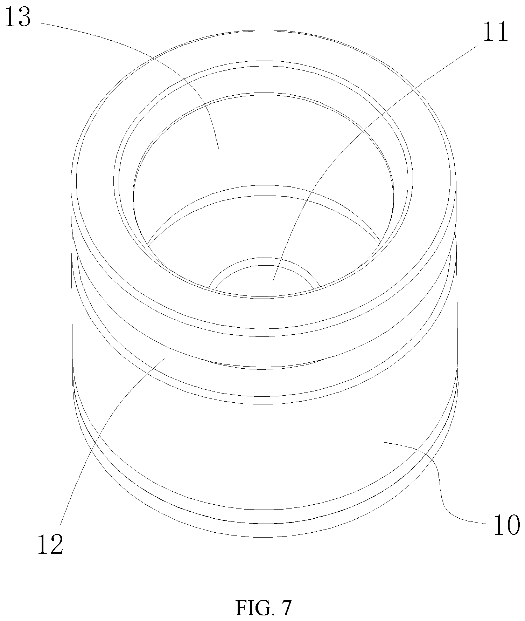

As shown in FIG. 3 and FIG. 7, the bottom of the cup holder 10 is provided with a through hole 11. As shown in FIG. 1 to FIG. 3 and FIG. 7, the cup holder 10 is provided with a placement cavity 13, the jelly roll structure is placed in the placement cavity 13, and the jelly roll structure is carried by the cup holder 10, and conveyed by the conveyor line 20 between two adjacent stations of the conveyor line 20. Generally, dust and/or foreign matter attaching to the cavity walls of the placement cavity 13 of the cup holder 10 is more than the dust and/or foreign matter attached to the outer walls of the cup holder 10. However, if the dust and/or foreign matter attached to the cavity walls of the placement cavity 13 or the dust and/or foreign matter attached to the outer walls of the cup holder 10 is not cleaned, either may contaminate the jelly roll structure during the cyclic use of the cup holder 10 for conveying jelly roll structures. Therefore, it is essential to use the cup holder dust removal mechanism provided in the embodiments of the present application to perform dust removal and cleaning on the cup holder 10. When the cup holder 10 moves to the working section 413, it is immediately blown by the pressurized airflow from the blowing nozzle 51, causing the dust and/or foreign matter attached to the cavity walls of the placement cavity 13 to be blown and detached. Since the bottom of the cup holder 10 is provided with the through hole 11, and the extraction port 62 of the extraction end 61 operates synchronously with the blowing, the dust and/or foreign matter attached to the cavity walls of the placement cavity 13, after blown and detached, is directly extracted through the through hole 11 without being raised or scattered from the placement cavity 13, thereby reducing the probability of the dust and/or foreign matter blown and detached from cavity walls of the placement cavity 13 falling onto the conveyor line 20. Additionally, the dust and/or foreign matter attached to the outer walls of the cup holder 10 is also blown and detached and directly extracted by the extraction port 62 of the extraction end 61, effectively reducing the probability of the dust and/or foreign matter blown and detached from the outer walls of the cup holder 10 falling onto the conveyor line 20.

To reduce the probability of dust and/or foreign matter blown and detached from the cup holder 10 falling onto the conveyor line 20 as thorough as possible, in some embodiments of the present application, within a unit time, the extraction volume of the extraction apparatus 60 is greater than or equal to the blowing volume of the blowing apparatus 50. This ensures that the accommodation cavity 31 of the box 30 is maintained in a relatively negative pressure state or a relatively stable pressure state, and the airflow direction within the accommodation cavity 31 is always toward the extraction port 62, such that dust and/or foreign matter blown and detached from the cup holder 10 is immediately extracted, preventing the dust and/or foreign matter from diffusing or scattering, or escaping from the accommodation cavity 31 through the box inlet 32 and box outlet 33.

"Within a unit time" means that the time during which the extraction apparatus 60 blows airflow into the accommodation cavity 31 is equal to the time during which the extraction apparatus 60 extracts airflow from the accommodation cavity 31, and within this time, the extraction volume of the airflow extracted by the extraction apparatus 60 is greater than or equal to the blowing volume of the airflow blown by the blowing apparatus 50. For example, with 1s as the unit time, the extraction volume of the airflow extracted by the extraction apparatus 60 in 1s is greater than or equal to the blowing volume of the airflow blown by the blowing apparatus 50 in 1s.

"Relatively negative pressure state" means that, relative to the atmospheric pressure of the external environment, the air pressure within the accommodation cavity 31 is lower than the atmospheric pressure of the external environment. Therefore, in addition to the airflow blown into the accommodation cavity 31 by the blowing apparatus 50 through the blowing nozzle 51, air from the external environment flows into the accommodation cavity 31 through the box inlet 32 and box outlet 33 under the relative pressure difference and ultimately flows to the extraction port 62, ensuring that dust and/or foreign matter blown and detached from the cup holder 10 is immediately extracted, preventing the dust and/or foreign matter from diffusing or scattering, or escaping from the accommodation cavity 31 through the box inlet 32 and box outlet 33.

"Relatively stable pressure state" means that, relative to the atmospheric pressure of the external environment, the air pressure within the accommodation cavity 31 is equal to the atmospheric pressure of the external environment, such that air from the external environment does not flow into the accommodation cavity 31 through the box inlet 32 and box outlet 33, and the airflow within the accommodation cavity 31 does not flow out to the external environment through the box inlet 32 and box outlet. Within the accommodation cavity 31, due to the continuous blowing of airflow by the blowing apparatus 50 and the continuous extraction of airflow by the extraction apparatus 60, the airflow direction within the accommodation cavity 31 is fixed, meaning that the airflow flows the blowing nozzle 51 to the extraction port 62. Therefore, dust and/or foreign matter blown and detached from the cup holder 10 is immediately extracted, preventing the dust and/or foreign matter from diffusing or scattering, or escaping from the accommodation cavity 31 through the box inlet 32 and box outlet 33.

The configuration of the cup holder dust removal mechanism in the embodiments of the present application is: within a unit time, the extraction volume of the extraction apparatus 60 is always greater than the blowing volume of the blowing apparatus 50.

In some embodiments of the present application, the transfer apparatus 40 does not require power equipment to drive the cup holder 10 to move along the transfer track 410. Since the conveyor line 20 is continuously moving, the cup holders 10 on the conveyor line 20 continuously enter the transfer track 410 from the inlet of the inlet section 411, such that subsequent cup holders 10 on the transfer track 410 push the preceding cup holders 10 forward.

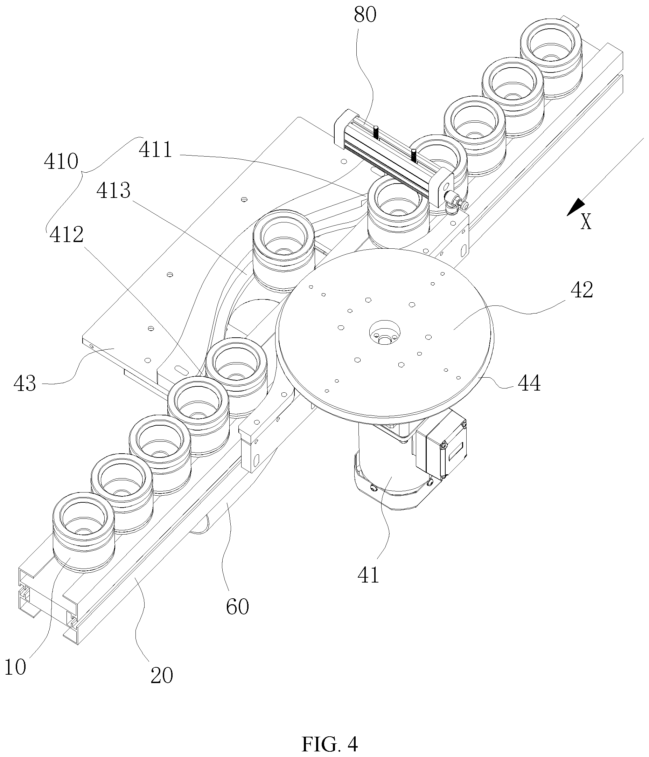

To improve the operation efficiency of the dust removal and cleaning for the cup holder 10, in some embodiments of the present application, as shown in FIG. 3 and FIG. 4, the transfer apparatus 40 includes a driver 41, a drive disc 42, and a connecting plate 43. The driver 41 is drivingly connected to the drive disc 42, and the driver 41 drives the drive disc 42 to rotate, such that the drive disc 42 drives the cup holder 10 to move forward along the transfer track 410, enabling the cup holder 10 to pass through the working section 413 quickly, thereby improving the operation efficiency of the dust removal and cleaning for the cup holder 10. Specifically, as shown in FIG. 3 and FIG. 4, the driver 41 is mounted on the box 30, the connecting plate 43 is mounted on the box 30, at least part of the drive disc 42 is located within the accommodation cavity 31 and above the conveyor line 20, and the connecting plate 43 has an arc-shaped edge 45 adapted to the edge of the drive disc 42. The edge of the drive disc 42 is opposite to the arc-shaped edge 45 to cooperatively form the transfer track 410. Since the part of the drive disc 42 located within the accommodation cavity 31 is above the conveyor line 20, the cup holder 10 moved by the conveyor line 20 is blocked by the drive disc 42, and then the rotating drive disc 42 drives the cup holder 10 to enter a space between the edge of the drive disc 42 and the arc-shaped edge 45 of the connecting plate 43 (that is, the cup holder 10 is driven by the rotating drive disc 42 to enter the transfer track 410), until the cup holder 10 is driven by the drive disc 42 to exit the transfer track 410 from the outlet of the outlet section 412 and the cup holder 10 returns to the conveyor line 20.

In some embodiments of the present application, only the part of the drive disc 42 that cooperates with the arc-shaped edge 45 of the connecting plate 43 to form the transfer track 410 extends into the accommodation cavity 31 of the box 30. In this case, a corresponding opening needs to be provided on the wall of the box 30, and the part of the drive disc 42 extending into the box 30 enters the accommodation cavity 31 through this opening.

In some embodiments of the present application, as shown in FIG. 1, the drive disc 42 is entirely located within the accommodation cavity 31, where the box 30 completely covers the drive disc 42, thereby reducing the need for openings on the wall of the box 30, simplifying the structural design of the box 30 of the cup holder dust removal mechanism.

Generally, the cup holder 10 is a carrier fixture made of metal material for carrying and conveying jelly roll structures. Alternatively, the cup holder 10 may be made of other hard materials, such as injection-molded hard plastic. The drive disc 42 is made of metal material or other hard materials, such as injection-molded hard plastic. When the edge of the hard drive disc 42 is in contact with the outer wall of the hard cup holder 10, slipping is likely to occur between the two hard materials. Therefore, in some embodiments of the present application, as shown in FIG. 3 and FIG. 4, a friction member 44 is mounted on the circumferential edge of the drive disc 42, such that the edge of the drive disc 42 is in contact with the outer wall of the cup holder 10 through the friction member 44, increasing the relative friction coefficient between the edge of the drive disc 42 and the outer wall of the cup holder 10, and reducing or even eliminating the frequency of slipping.

In some embodiments of the present application, as shown in FIG. 3 and FIG. 4, the friction member 44 is an annular elastic sleeve, the annular elastic sleeve being wrapped around the circumferential edge of the drive disc 42. The annular elastic sleeve can be quickly assembled onto the circumferential edge of the drive disc 42 in a single operation, making the assembly process simple and efficient, and improving assembly efficiency. The annular elastic sleeve increases the relative friction coefficient between the edge of the drive disc 42 and the outer wall of the cup holder 10, reducing or even eliminating the frequency of slipping.

In some embodiments of the present application, the friction member 44 includes a plurality of friction blocks, each friction block being sequentially and adjacently embedded and fixed along the circumferential edge of the drive disc 42. When the plurality of friction blocks are embedded and fixed along the circumferential edge of the drive disc 42, although two adjacent friction blocks are embedded and fixed as close as possible along the circumferential edge of the drive disc 42, small gaps inevitably exist between adjacent friction blocks. These gaps help increase the relative friction coefficient between the edge of the drive disc 42 and the outer wall of the cup holder 10, reducing or even eliminating the frequency of slipping.

To ensure that the cup holder 10 on the conveyor line 20 can accurately enter the transfer track 410, in some embodiments of the present application, as shown in FIG. 1 to FIG. 3 and FIG. 7, a circumferential outer wall of the cup holder 10 is provided with an annular groove 12, the annular groove 12 being adapted to the edge of the drive disc 42 and the arc-shaped edge 45. In other words, when the cup holder 10 on the conveyor line 20 moves to the inlet of the inlet section 411, the arc-shaped edge 45 of the connecting plate 43 first engages the annular groove 12, the cup holder 10 is blocked by the drive disc 42, and the edge of the drive disc 42 also engages the annular groove 12. Thus, the edge of the drive disc 42 and the arc-shaped edge 45 of the connecting plate 43 cooperatively provide positioning constraints for the cup holder 10, enabling the cup holder 10 to accurately enter the transfer track 410. In practice, the friction member 44 on the edge of the drive disc 42 abuts against the bottom of the annular groove 12, and the arc-shaped edge 45 of the connecting plate 43 also abuts against the bottom of the annular groove 12. During the process of the drive disc 42 rotating to drive the cup holder 10 forward along the transfer track 410, the friction member 44 undergoes elastic deformation, thereby driving the cup holder 10 to abut against the arc-shaped edge of the connecting plate 43 and rotate forward. Therefore, the spacing between the edge of the drive disc 42 and the arc-shaped edge 45 of the connecting plate 43 is slightly greater than the diameter of the bottom of the annular groove 12 but less than the diameter of the outer wall of the cup holder 10, and the thickness of the friction member 44 is greater than half the difference between the spacing between the edge of the drive disc 42 and the arc-shaped edge 45 of the connecting plate 43 and the diameter of the bottom of the annular groove 12. Thus, after the drive disc 42, the connecting plate 43, and the friction member 44 are assembled, when the cup holder 10 enters the transfer track 410, the friction member 44 abuts against the bottom of the annular groove 12, the bottom of the annular groove 12 abuts against the arc-shaped edge 45 of the connecting plate 43, and the cup holder 10 is driven by the rotation of the drive disc 42 to rotate forward along the arc-shaped edge 45.

In some embodiments of the present application, the arc length of the arc-shaped edge 45 corresponding to the working section 413 is greater than or equal to the circumference of the annular groove 12. In other words, during the process of the cup holder 10 rotating forward in the working section 413 of the transfer track 410, the cup holder 10 rotates at least one full turn, allowing all cavity walls and all outer walls of the placement cavity 13 of the cup holder 10 to be blown once, thereby achieving dust removal and cleaning of the cup holder 10 as thorough as possible.

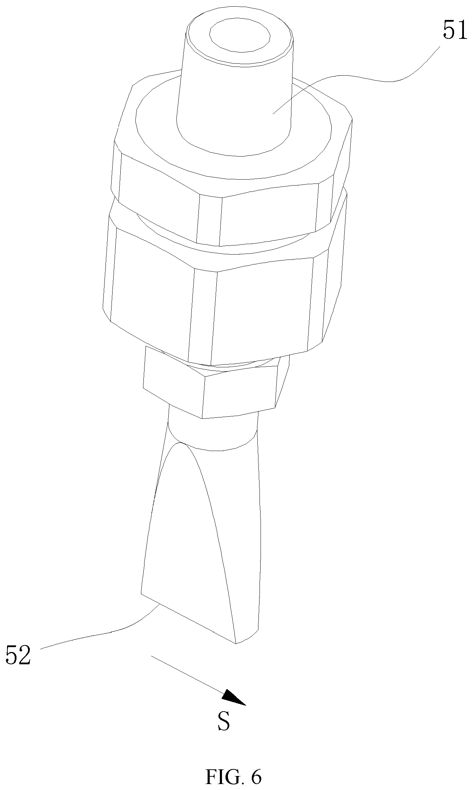

In some embodiments of the present application, the arc length of the arc-shaped edge 45 corresponding to the working section 413 is greater than the circumference of the annular groove 12, such that when rotating to move forward in the working section 413 of the transfer track 410, the cup holder rotates more than one turn, preferably 4/3 turns. This ensures that the diameter of the drive disc 42 and the size of the arc-shaped edge 45 of the connecting plate 43 are not excessively large, facilitating a compacted and miniaturized design of the cup holder dust removal mechanism. Furthermore, as shown in FIG. 6, the outlet of each blowing nozzle 51 is configured as a linear outlet 52, such that the pressurized airflow blown from each blowing nozzle 51 forms a planar air curtain. Compared to columnar or linear pressurized airflow, the planar air curtain can blow a larger area of the cup holder 10, resulting in higher operation efficiency of the dust removal and cleaning for the cup holder 10 and higher cleanliness during the dust removal and cleaning. As shown in FIG. 3 and FIG. 6, the linear directions of the linear outlets 52 of two adjacent blowing nozzles 51 (that is, the direction indicated by the S arrow in FIG. 6) intersect, meaning that the planar air curtains blown from adjacent blowing nozzles 51 cross each other. Thus, when the cup holder 10 rotates forward in the working section 413 and the cup holder 10 rotates 4/3 turns, the planar air curtains formed by the blowing of each blowing nozzle 51 can comprehensively blow the cavity walls and outer walls of the placement cavity 13 of the cup holder 10, achieving dust removal and cleaning of the cup holder 10 as thorough as possible, and improving the cleanliness of the cup holder 10 during the dust removal and cleaning.

In some embodiments of the present application, the planar air curtains blown from adjacent blowing nozzles 51 are perpendicular to each other, that is, the linear directions of the linear outlets 52 of adjacent blowing nozzles 51 are perpendicular to each other. Alternatively, in some embodiments of the present application, along the convey direction of the cup holder 10 in the working section 413, the intersection angles between the linear directions of the linear outlets 52 of the blowing nozzles 51 and the extension direction of the conveyor line 20 (that is, the direction indicated by the X arrow in FIG. 1 to FIG. 4) are different. Thus, when the cup holder 10 rotates forward in the working section 413 and the cup holder 10 rotates 4/3 turns, the planar air curtains formed by the blowing of each blowing nozzle 51 can comprehensively blow the cavity walls and outer walls of the placement cavity 13 of the cup holder 10, achieving dust removal and cleaning of the cup holder 10 as thorough as possible, and improving the cleanliness of the cup holder 10 during the dust removal and cleaning.

As shown in FIG. 5, in some embodiments of the present application, the extraction end 61 is configured in a flared shape, and the extraction port 62 is the large end of the flared extraction end 61. This reduces the assembly space occupied by the extraction end 61 of the extraction apparatus 60 in the cup holder dust removal mechanism, facilitating a compacted and miniaturized design of the cup holder dust removal mechanism.

In some embodiments of the present application, the blowing apparatus 50 uses an air pump to actively blow airflow, and the extraction apparatus 60 also uses an air pump to actively extract airflow. This ensures that the blowing volume of the blown airflow and the extraction volume of the extracted airflow remain stable, reducing or even avoiding situations where unstable blowing or extraction airflow leads to suboptimal dust removal and cleaning effects in the box 30 for the cup holder 10.

In some embodiments of the present application, the blowing apparatus 50 uses pressurized airflow provided by the factory workshop's airflow pipeline for blowing, and the extraction apparatus 60 also uses the factory workshop's airflow pipeline for extraction. However, the pressure of the factory workshop's airflow pipeline may fluctuate, leading to situations where the blowing volume of the blown airflow exceeds the extraction volume of the extracted airflow, and causing a relatively positive pressure state in the accommodation cavity 31 of the box 30, thus resulting in failure of the dust removal and cleaning for the cup holder 10. To reduce or avoid such situations, as shown in FIG. 1, FIG. 2, and FIG. 5, the cup holder dust removal mechanism further includes a negative pressure airflow detection sensor 70, the negative pressure airflow detection sensor 70 being mounted within the accommodation cavity 31 and near the extraction end 61, and the negative pressure airflow detection sensor 70 being configured to detect the negative pressure airflow speed within the accommodation cavity 31. The cup holder dust removal mechanism employs the negative pressure airflow detection sensor 70 to automatically detect the negative pressure airflow speed within the accommodation cavity 31 of the box 30, enabling monitoring of the negative pressure airflow speed. When the pressure of the factory workshop's airflow pipeline fluctuates, causing a relatively positive pressure state in the accommodation cavity 31 of the box 30 (that is, the airflow speed in the accommodation cavity 31 detected by the negative pressure airflow detection sensor 70 is below a set threshold), the negative pressure airflow detection sensor 70 issues an alarm, and the workers promptly perform maintenance and adjustments on the cup holder dust removal mechanism, ensuring that the cup holder dust removal mechanism continues to perform dust removal and cleaning on the cup holder 10 normally.

"Relatively positive pressure state" means that, relative to the atmospheric pressure of the external environment, the air pressure within the accommodation cavity 31 is greater than the atmospheric pressure of the external environment. In this case, the airflow within the accommodation cavity 31 flows to the external environment through the box inlet 32 and box outlet 33 under the relative pressure difference (that is, the airflow flows out of the box 30 from the accommodation cavity 31), carrying dust and/or foreign matter blown and detached from the cup holder 10 to scatter away. Within the accommodation cavity 31, the dust and/or foreign matter may fall onto the conveyor line 20. At the box inlet 32 and box outlet 33, the dust and/or foreign matter may fall either onto the conveyor line 20 or onto the cup holders 10 at these locations, particularly re-contaminating the cup holders 10 that have already been cleaned at the box outlet 33.

In some embodiments of the present application, the cup holder dust removal mechanism further includes a control module (not shown in the figure), and the blowing nozzle 51 of the blowing apparatus 50 and the extraction end 61 of the extraction apparatus 60 are each equipped with an electromagnetic switch valve. The control module is electrically connected to the negative pressure airflow detection sensor 70, the control module is electrically connected to the power equipment of the conveyor line 20, the control module is electrically connected to the electromagnetic switch valve on the blowing apparatus 50 and the electromagnetic switch valve on the extraction end 61, and the control module is electrically connected to the driver 41 of the transfer apparatus 40. When the pressure of the factory workshop's airflow pipeline fluctuates, causing a relatively positive pressure state in the accommodation cavity 31 of the box 30, the negative pressure airflow detection sensor 70 issues an alarm and the negative pressure airflow detection sensor 70 sends an alarm signal to the control module. When the control module receives the alarm signal, the control module controls the power equipment of the conveyor line 20, the electromagnetic switch valve on the blowing apparatus 50, the electromagnetic switch valve on the extraction end 61, and the driver 41 of the transfer apparatus 40 to power off and stop. After workers perform maintenance and adjustments on the cup holder dust removal mechanism, the cup holder dust removal mechanism is restarted to continue normal dust removal and cleaning of the cup holder 10. Furthermore, as shown in FIG. 1, the cup holder dust removal mechanism is provided with a counter 91 on the conveyor line 20 near the box inlet 32, the counter 91 being electrically connected to the control module, and the counter 91 accurately counting the number of cup holders 10 entering the accommodation cavity 31 for dust removal and cleaning.

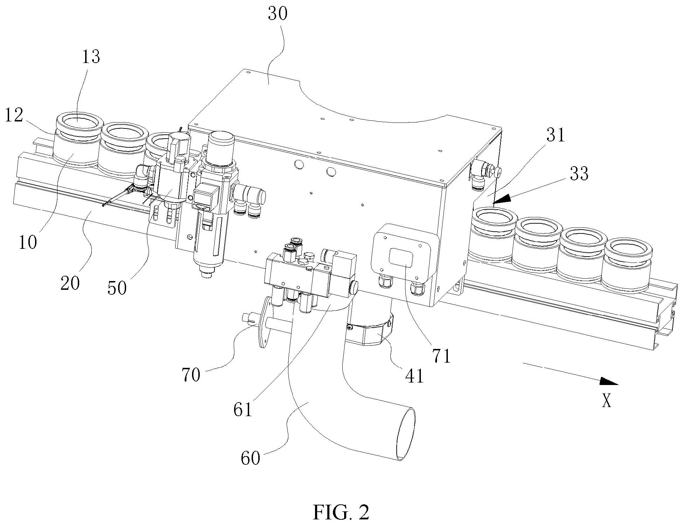

In some embodiments of the present application, as shown in FIG. 2, the cup holder dust removal mechanism is further mounted with a negative pressure display meter 71, the negative pressure display meter 71 being electrically connected to the negative pressure airflow detection sensor 70. The negative pressure display meter 71 displays the negative pressure airflow speed, in the accommodation cavity 31, detected by the negative pressure airflow detection sensor 70 in real time, and the workers directly observe the negative pressure display meter 71 to know about the negative pressure airflow speed conditions within the accommodation cavity 31.

Dust and/or foreign matter attached to the cavity walls and outer walls of the placement cavity 13 of the cup holder 10 generally carries a static charge, causing the dust and/or foreign matter to adhere stubbornly to the cavity walls and outer walls of the placement cavity 13 of the cup holder 10, thus making it difficult to blow and detach the dust and/or foreign matter from the cup holder 10. To address this, in some embodiments of the present application, as shown in FIG. 1, FIG. 3, and FIG. 4, the cup holder dust removal mechanism further includes an ion airflow generator 80, the ion airflow generator 80 being mounted on the box 30, with an outlet of the ion airflow generator 80 in communication with the accommodation cavity 31, and the outlet of the ion airflow generator 80 disposed above the inlet section 411. Generally, the outlet of the ion airflow generator 80 is aligned to blow ion airflow toward the box inlet 32 and the inlet section 411. The ion airflow, with its ionic charge, neutralizes the static charge carried by the dust and/or foreign matter, thereby removing the static charge of the dust and/or foreign matter, eliminating the electrostatic adsorption capability of the dust and/or foreign matter. This enables the dust and/or foreign matter attached to the cup holder 10 to be blown and detached from the cup holder 10 as thorough as possible, thereby improving the cleanliness of the cup holder 10 during the dust removal and cleaning.

In an embodiment of the present application, the design of the cup holder dust removal mechanism specifically adopts the following scheme: The cup holder dust removal mechanism includes a conveyor line 20, a box 30, a transfer apparatus 40, a blowing apparatus 50, an extraction apparatus 60, a negative pressure airflow detection sensor 70, an ion airflow generator 80, and a counter 91. The conveyor line 20 passes through the accommodation cavity 31 of the box 30 and the conveyor line 20 is configured to convey the cup holder 10. The transfer apparatus 40 is provided with a transfer track 410, the transfer track 410 having an inlet section 411, an outlet section 412, and a working section 413 located between the inlet section 411 and the outlet section 412. The inlet of the inlet section 411 and the outlet of the outlet section 412 are both docked with the conveyor line 20, and the projection of the working section 413 does not overlap with the projection of the conveyor line 20 at all. A plurality of blowing nozzles 51 are sequentially spaced along the arc-shaped path of the working section 413 directly above the entire working section 413, and the entire region directly below the working section 413 is within the range of the extraction port 62, with the bottom of the cup holder 10 being correspondingly provided with a through hole 11. During the blowing process of the blowing apparatus 50 and the extraction process of the extraction apparatus 60, within a unit time, the extraction volume of the extraction apparatus 60 is always greater than the blowing volume of the blowing apparatus 50. The transfer apparatus 40 includes a driver 41, a drive disc 42, and a connecting plate 43, the driver 41 being drivingly connected to the drive disc 42, with the driver 41 driving the drive disc 42 to rotate, such that the drive disc 42 drives the cup holder 10 to move forward along the transfer track 410. The connecting plate 43 has an arc-shaped edge 45 adapted to the edge of the drive disc 42, and the edge of the drive disc 42 is opposite to the arc-shaped edge 45 to cooperatively form the transfer track 410. An annular elastic sleeve fixedly sleeves the circumferential edge of the drive disc 42 to increase the relative friction coefficient between the edge of the drive disc 42 and the outer wall of the cup holder 10, reducing or even eliminating the frequency of relative slipping between the drive disc 42 and the cup holder 10. Corresponding to the circumferential edge of the drive disc 42 and the arc-shaped edge 45 of the connecting plate 43, the circumferential outer wall of the cup holder 10 is provided with an annular groove 12, the annular groove 12 being adapted to the edge of the drive disc 42 and the arc-shaped edge 45. A plurality of blowing nozzles 51 with outlets configured as linear outlets 52 are selected, and the linear directions of the linear outlets 52 of two adjacent blowing nozzles 51 are perpendicular to each other. The negative pressure airflow detection sensor 70 is mounted within the accommodation cavity 31 and near the extraction end 61, and the negative pressure airflow detection sensor 70 is configured to detect the negative pressure airflow speed within the accommodation cavity 31. The ion airflow generator 80 is mounted on the box 30, with the outlet of the ion airflow generator 80 in communication with the accommodation cavity 31. The outlet of the ion airflow generator 80 is disposed above the inlet section 411, generally the outlet of the ion airflow generator 80 being aligned to blow ion airflow toward the box inlet 32 and the inlet section 411. Additionally, a counter 91 is provided on the conveyor line 20, the counter 91 accurately counting the number of cup holders 10 entering the accommodation cavity 31 for dust removal and cleaning.

According to another aspect of the present application, a battery production line is provided, where the battery production line includes the cup holder dust removal mechanism as described above. The battery production line employs the cup holder dust removal mechanism provided in the embodiments of the present application to perform dust removal and cleaning on the cup holder 10 used for conveying jelly roll structures. During the dust removal and cleaning, the transfer apparatus 40 can move the cup holder 10 out of the conveyor line 20, the blowing apparatus 50 blows the dust and/or foreign matter remaining on the cup holder 10, and the extraction apparatus 60 removes the dust and/or foreign matter, thereby achieving comprehensive dust removal and cleaning of the cup holder 10. Moreover, since the transfer apparatus 40 moves the cup holder 10 out of the conveyor line 20, the probability of the dust and/or foreign matter blown off the cup holder 10 falling onto the conveyor line 20 is reduced, thereby reducing the possibility of re-contamination of the cup holder 10 by dust and/or foreign matter, and improving the cleaning effect of the dust removal and cleaning for the cup holder 10.

The above are merely optional embodiments of the present application and are not intended to limit the present application. For those skilled in the art, various modifications and variations can be made to the present application. Any modifications, equivalent substitutions, improvements, and the like made within the spirit and principles of the present application shall be included within the scope of the claims of the present application.

## Claims

1. A cup holder dust removal mechanism comprising:
a conveyor line configured to convey a cup holder;
a box having an accommodation cavity, wherein the conveyor line passes through the box;
a blowing apparatus mounted on the box, the blowing apparatus being provided with a blowing nozzle, wherein the blowing nozzle is in communication with the accommodation cavity; and
an extraction apparatus mounted on the box, the extraction apparatus being provided with an extraction end, wherein the extraction end is in communication with the accommodation cavity;
wherein,
the cup holder dust removal mechanism further comprises a transfer apparatus mounted on the box, the transfer apparatus being provided with a transfer track, wherein the transfer track is located within the accommodation cavity, the transfer track comprising an inlet section, an outlet section, and a working section located between the inlet section and the outlet section, wherein an inlet of the inlet section and an outlet of the outlet section are both docked with the conveyor line, and in a vertical direction, at least part of a projection of the working section does not overlap with a projection of the conveyor line.

2. The cup holder dust removal mechanism according to claim 1, wherein,
the projection of the working section does not overlap with the projection of the conveyor line at all.

3. The cup holder dust removal mechanism according to claim 1 or 2, wherein,
a bottom of the cup holder is provided with a through hole, and an extraction port of the extraction end is located directly below the working section.

4. The cup holder dust removal mechanism according to any one of claims 1 to 3, wherein,
the transfer apparatus comprises a driver, a drive disc, and a connecting plate, the driver being mounted on the box, the driver being drivingly connected to the drive disc, at least part of the drive disc being located within the accommodation cavity, the connecting plate being mounted on the box, and the connecting plate comprising an arc-shaped edge adapted to an edge of the drive disc, wherein the edge of the drive disc is opposite to the arc-shaped edge to cooperatively form the transfer track.

5. The cup holder dust removal mechanism according to claim 4, wherein,
the drive disc is entirely located within the accommodation cavity.

6. The cup holder dust removal mechanism according to claim 4 or 5, wherein,
a friction member is mounted on a circumferential edge of the drive disc.

7. The cup holder dust removal mechanism according to claim 6, wherein,
the friction member is an annular elastic sleeve, wherein the annular elastic sleeve is wrapped around the circumferential edge of the drive disc;
or the friction member comprises a plurality of friction blocks, each friction block being sequentially and adjacently embedded and fixed along the circumferential edge of the drive disc.

8. The cup holder dust removal mechanism according to any one of claims 4 to 7, wherein,
a circumferential outer wall of the cup holder is provided with an annular groove, the annular groove being adapted to the edge of the drive disc and the arc-shaped edge.

9. The cup holder dust removal mechanism according to claim 8, wherein,
an arc length of the arc-shaped edge corresponding to the working section is greater than or equal to a circumference of the annular groove.

10. The cup holder dust removal mechanism according to any one of claims 1 to 9, wherein,
the blowing apparatus is provided with a plurality of blowing nozzles, the plurality of blowing nozzles being sequentially spaced along an arc-shaped path of the working section.

11. The cup holder dust removal mechanism according to claim 10, wherein,
an outlet of each blowing nozzle is configured as a linear outlet, and linear directions of the linear outlets of two adjacent blowing nozzles intersect.

12. The cup holder dust removal mechanism according to claim 11, wherein,
along a convey direction of the cup holder in the working section, intersection angles between the linear directions of the linear outlets of the blowing nozzles and an extension direction of the conveyor line are different.

13. The cup holder dust removal mechanism according to any one of claims 1 to 12, wherein,
the extraction end is configured in a flared shape.

14. The cup holder dust removal mechanism according to any one of claims 1 to 13, wherein,
an extraction volume of the extraction apparatus is greater than or equal to a blowing volume of the blowing apparatus.

15. The cup holder dust removal mechanism according to any one of claims 1 to 14, wherein,
the cup holder dust removal mechanism further comprises a negative pressure airflow detection sensor, the negative pressure airflow detection sensor being mounted within the accommodation cavity, and the negative pressure airflow detection sensor being configured to detect an extraction airflow speed within the accommodation cavity.

16. The cup holder dust removal mechanism according to any one of claims 1 to 15, wherein,
the cup holder dust removal mechanism further comprises an ion airflow generator, the ion airflow generator being mounted on the box, an outlet of the ion airflow generator being in communication with the accommodation cavity, and the outlet of the ion airflow generator being disposed above the inlet section.

17. A battery production line comprising the cup holder dust removal mechanism according to any one of claims 1 to 16.
